# EUROPEAN PATENT APPLICATION

(11) **EP 0 968 765 A1**
(43) Date of publication of application: **05.01.2000**
(21) Application number: 99202058.6
(22) Date of filing: 25.06.1999
(51) Int. Cl.: B01J 31/10, C08F 2/22, A62D 3/00

(54) **Catalytic microgels**

(30) Priority: 01.07.1998 GB 9814096
(71) Applicant: The Secretary of State for Defence in her Britannic Majesty's Gov.t fo the United Kingdom of Great Britain and North Ireland, Farnborough, Hampshire GU14 0LX (GB)
(72) Inventor: Wilkinson, Terence Sean, Salisbury, Willtshire SP4 0JO (GB)
(74) Representative: Bowdery, Anthony Oliver

(57) **Abstract**

A microgel (preferably prepared via emulsion polymerization) having on the surface of the particles thereof an acid residue, in particular a sulphonic acid residue, which can act as a catalyst.

Microgels of this type can be used to catalyse hydrolysis reactions of compounds such as certain chemical warfare of pesticide reagents which are subject to acid hydrolysis.

They may be applied to surfaces or be incorporated into coatings such as paints, which are applied to surfaces which are liable to come into contact with these compounds.

## Description

The present invention relates to catalytic microgels and to their use in promoting chemical reactions, in particular decontamination reactions. The microgels may be used directly or may be formulated for example so as to produce coatings which will eliminate toxic reagents which contact them.

Microgels comprise small particles, generally with an average diameter of up to 100nm, of cross-linked polymeric material. They are generally prepared by effecting an emulsion polymerisation of a suitable monomer in the presence of a surfactant.

These particles have found applications in the field of coatings and paint technology where they are used prinicipally as rheology modifiers (see for example C. Raquois et al., Progress in Organic Coatings, 26 (1995) 239-250, and D. Saatweber et al., Progress in Organic Coatings 28 (1996) 33-41). The properties of the microgels can be varied by changing the composition, structure, crosslinking chemistry and particle size. In general, use is made of their ability to absorb solvent and to swell in the coating.

Their small size however provides advantages in terms of potential application as catalysts since they present a large surface area on which reaction may be effected. Modification of the surface of microgels to provide a catalytic surface having hydroxyaminocarbonyl residues on the surface has been described previously (R. H. Weatherhead et al., Makromol. Chem. 181, 2529-2540 (1980).

The applicants have found that microgels can be formed with acidic species on the surface, and these microgels can be effective as catalysts.

The present invention provides a microgel having on the surface of particles thereof an acid residue which can act as a catalyst.

It has been shown (J.R. Ward et al., Bioorg. Chem. 16. 12-16 (1988), that strongly acidic species have clear potential to be used as hydrolysis catalysts for the breakdown of organophosphate esters. Examples of such acidic species are those derived from strong acids in particular sulphonic acid.

Thus microgels wherein the acid residue is a sulphonic acid residue form a preferred aspect of the invention.

As reported below, a series of microgels which were functionalised with a strong acid moiety to impart catalytic activity, were prepared. In particular, the surface was the principle target for the functionalisation.

Microgels of the invention suitably comprise polymers as are known in the art, such as polyethylene, polystyrene, polyisobutylene, isoprene, polytetrafluoroethylene, polyvinylidene, polyvinylidenefluoride, polyethyleneoxide, polypeptides, polyurethanes, polyesters, polysiloxanes and polyacrylates such as methacrylates.

In particular, the microgels comprise cross-linked polystyrene or polymethylmethacrylate.

Suitably the polymer of the microgel has a significant degree of cross-linking polymer, in particular cross-linked polystyrene. Such gels are less likely to be permeable to organophosphate chemicals and therefore catalysis will take place preferentially on the surface of the gel particles.

In addition, the catalytic acid functionality may be held rigidly on the surface of the microgel, reducing the possibility that it would react with and break down the polymeric structure of the microgel itself.

In a further aspect, the invention provides a method of forming a microgel as described above, which method comprises effecting an emulsion polymerisation of a monomer to form a microgel, said polymerisation being carried out in the presence of a catalytic reagent having a catalytic acid functionality or a salt thereof; and thereafter if necessary, converting any salts of said catalytic acid to the acid.

Preferably the catalytic reagent comprises a strong acid, in particular a sulphonic acid as mentioned above. Where it is a salt, this is subsequently converted to the acid form for example using ion exchange chromatography. Suitable salts include alkali metal salts such as sodium and potassium, and alkaline earth salts such as calcium or magnesium.

The acid may be derivatised with a monomer, such as is known in the polymer art, so as to form a integral part of the microgel particle.

Thus the catalytic reagent may be represented as

R¹-M

where R¹ is an acid group, in particular a sulphonic acid, and M is an unsaturated monomer group. Suitable monomers include those which give rise to the polymers listed above in relation to the microgel. In particular, they may be styrene, acrylate or acrylamido monomers. Examples of such monomers include compounds of formula (I)

H₂C=C(R¹)R²SO₃R³ (I)

where R¹ is hydrogen or alkyl such as methyl ethyl or propyl, R² is an alkylene such as -(CH₂)ₙ- where n is 1, 2 or 3, or phenylene bridging group, or an acrylic ester of acrylamido group, and R³ is hydrogen or a cation, in particular alkali metal ions such as sodium or potassium.

Thus examples of suitable catalytic reagents include styrene sulphonic acid, sulphopropylmethacrylate, 2-acrylamido-2-methyl propane sulphonic acid, vinyl sulphonic acid, sulphopropylacrylate or a salt thereof. A preferred catalytic reagent comprises 2-acrylamido-2-methyl propane sulphonic acid.

Specifically, the emulsion polymerisation method comprises mixing together a monomer, a polymerisation initiator, a catalytic reagent and a surfactant under conditions which cause the monomer to polymerise to form a microgel having catalytic acid groups on the surface thereof. Suitably the mixture used comprises from 5-25%w/w of the catalytic reagent.

Preferably the mixture further comprises a cross-linking agent in order to obtain the cross-linked polymeric microgels. The cross-linker, which may comprises any difunctional molecule as is understood in the art, is preferably present in the mixture in a significant amount, for example from 5-12%w/w and preferably at about 10% w/w of the amount of monomer present so as to give a polymer with a high degree of cross-linking.

A suitable cross-linker is allyl methacrylate, divinylbenzene, glycidylmethacrylate and ethylene glycol dimethacrylate.

Initiators for emulsion polymerisation are well known in the art. Examples include ammonium persulphate, E-butylhydroperoxide and redox initiators such as metabisulphates.

The microgels of the invention are useful in catalysing the decompositon of unwanted or toxic chemicals such as chemical warfare agents such as tabun (GA), sarin (GB), soman (GD) and pesticides, in particular organophosphate pesticides. These agents are susceptible to acid catalysed hydrolysis.

Thus in a further aspect, the invention provides a method of decomposing an unwanted chemical which is susceptible to acid catalyised hydrolyis, said method comprising contacting said chemical with a microgel according to anyone of claims 1 to 5 under conditions which allow the acid groups on the microgel to catalyse the decomposition of said chemical.

Microgels of the invention may be incorporated into coating materials such as paints. These paints may then be applied to surfaces which are likely to be subjected to contact with the chemicals as described above. Such surfaces may be found for example on military vehicles or agricultural equipment.

It may be preferable in such circumstances, for the coating to have a level of porosity, for example, it may be macroporous. This then would allow the agent to penetrate into the coating where hydrolysis reaction would be catalysed by the microgel. An advantage of the use of sulphonic acid as the catalytic group in these circumstances is that it is hydrophilic in nature and therefore, will draw in water in order to effect the hydrolysis reaction

Such coatings or paints would further comprise other conventional components known in the art, such as colloids, binders, fillers, crops-linking agents and curing agents.

A range of microgels in accordance with the invention have been prepared and tested. The microgels were characterised using, amongst others, rheology and dynamic light scattering techniques.

Desorption studies using the chemical warfare agent GD, revealed a lower amount of material was released from a layer of microgel of the invention, as compared to a control gel, which contained no acidic groups. This indicates that the functionalised microgel particles were acting in a catalytic manner to decompose the agent.

The invention will now be particularly described by way of Example with reference to the accompanying diagrammatic drawings in which:
Figures 1a-1d show the average particle size, as determined by dynamic light scattering, of various microgels of the invention; and
Figure 2 is a graph showing the results of vapour desorption studies from the microgels of the invention.

### Example 1

### Preparation of a Functionalised Microgel

Water (89g) and sodium dodecylsulphate (SDS) (6.75g) were added to a reaction vessel which had been purged with nitrogen, and the mixture heated to 65°C. A seed mixture comprising 10% of a first feed mixture of styrene (50.63g) and allylmethacrylate (5.62g) was added to the reaction vessel and the contents heated to 75°C.

A polymerisation initiator, ammonium persulphate (0.375g) was added to the reaction vessel which was then heated to 85°C and held 30 minutes. A further 35% of the first feed mixture was then added gradually over a period of 30 minutes.

A second feed mixture consisting of 2-acrylamido-2-methyl propane sulphonic acid (AMPS) (18.75g) and water (80g) was then added simulataneously with the remainder of the first feed mixture over a period of 90 minutes.

A microgel lattice was formed which was purified by dialysis.

### Example 2

### Further Microgel preparations

Using the emulsion polymerisation method of Example 1, other microgels were prepared using various sulphonic acid monomers. These were styrene sulphonic acid sodium salt (STYNa), sulphopropylmethacrylate potassium salt (SPMK) and 2-acrylamido-2-methyl propane sulphonic acid (AMPS).

A summary of the microgel formulations (in terms of the acid monomer feed quantity) is presented in Table 1. The colloids were prepared at 30% solids. Allyl methacrylate was used as the difunctional cross linker at a constant level of 10%w/w on styrene.

**Table 1**

| Microgel Formulations | | | | | |
|---|---|---|---|---|---|
| Microgel | Acid Monomer | Microgel | Acid Monomer | Microgel | Acid Monomer |
| Control | None | | | | |
| SA25 | AMPS 25% | SN25 | STYNa 25% | SK25 | SPMK 25% |
| SA20 | AMPS 20% | SN20 | STYNa 20% | SK20 | SPMK 20% |
| SA15 | AMPS 15% | SN15 | STYNa 15% | SK15 | SPMK 15% |
| SA10 | AMPS 10% | SN10 | STYNa 10% | SK10 | SPMK 10% |
| SA5 | AMPS 5% | SN5 | STYNa 5% | SK5 | SPMK 5% |

The lattices were purified by dialysis and, in the case of the salt sulphonic acid monomers, ion exchanged to convert them to the acid form.

During the microgel preparations the SK (sulphopropylmethacrylate potassium salt monomer) series proved difficult to synthesise. A rapid ramp in viscosity was observed midway through the polymerisations which, it is suspected, was a result of SPMK monomer polymerising wholly in the aqueous phase. There were no such problems during the synthesis of the SA and SN series.

### Example 3

### Critical Coagulation Concentration

The stability of the microgels (10% aqueous solution) was determined by measurements of the critical coagulation concentration using CaCl₂.

The number of moles of CaCl₂ which were added to induce flocculation are shown in Table 3.

**Table 3**

| Sample | CCC (moles) x10⁻⁶ | Sample | CCC (moles) |
|---|---|---|---|
| CTRL | 3.5 | | |
| SA25 | 40.2 | SN25 | 11.1 |
| SA15 | 21.0 | SN20 | 11.7 |
| SA10 | 29.0 | SN15 | 15.8 |
| SA5 | 16.3 | SN10 | 5.8 |
| SA5 | 6.4 | SN5 | 7.5 |

It would appear from the CCC data that the SA polymers are more stable than their SN counterparts. There is also a clear trend within the SA polymers which shows that the microgels with a higher AMPS content are more stable.

One possible explanation for this data is that the acid salt monomer (STYNa) has not polymerised with the colloid as efficiently as the AMPS (or is not immediately at the surface of the colloid).

### Example 4

### Dynamic Light Scattering

The microgels of Example 2 were further characterised using dynamic light scattering techniques.
The dynamic light scattering source was a 2W Ar-Ion laser (488nm) coupled to a Brookhaven Instruments BI-200SM Goniometer and BI-2030AT correlator. The scattered light was observed at 90° to the incident and the size data (±10nm) was obtained from the quadratic function of cumulant analysis.

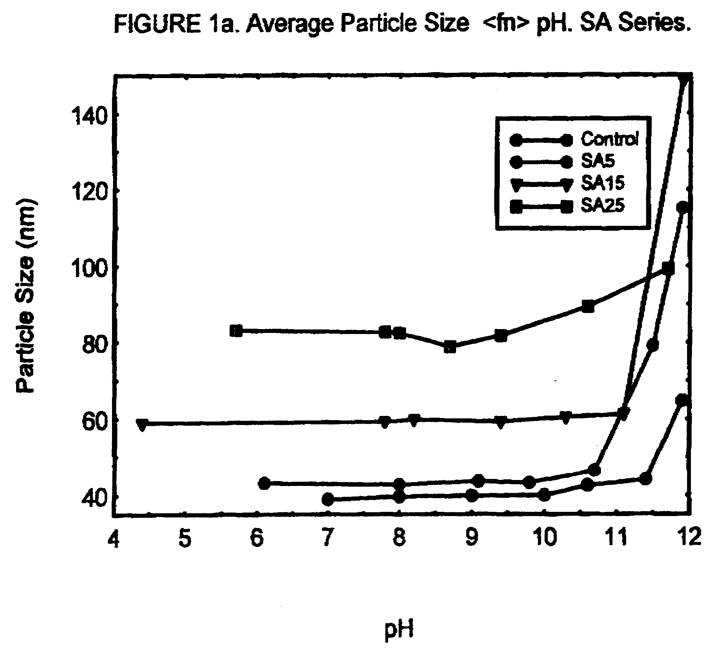

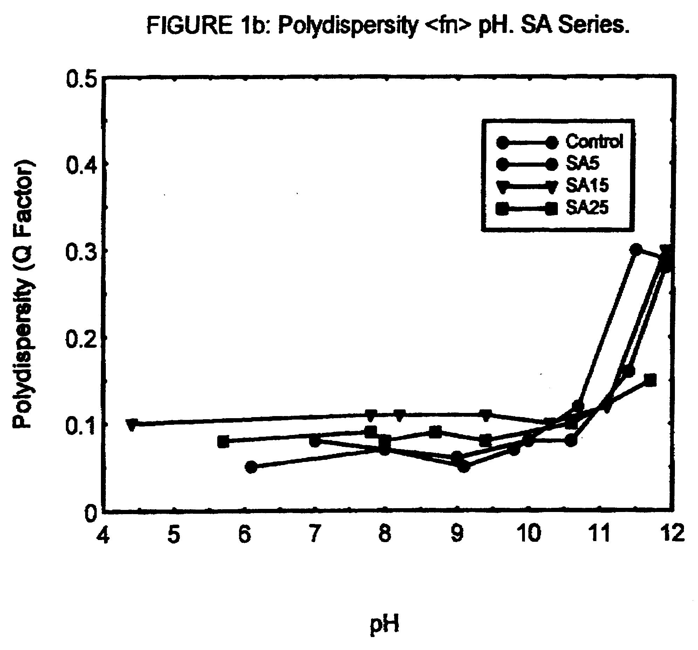

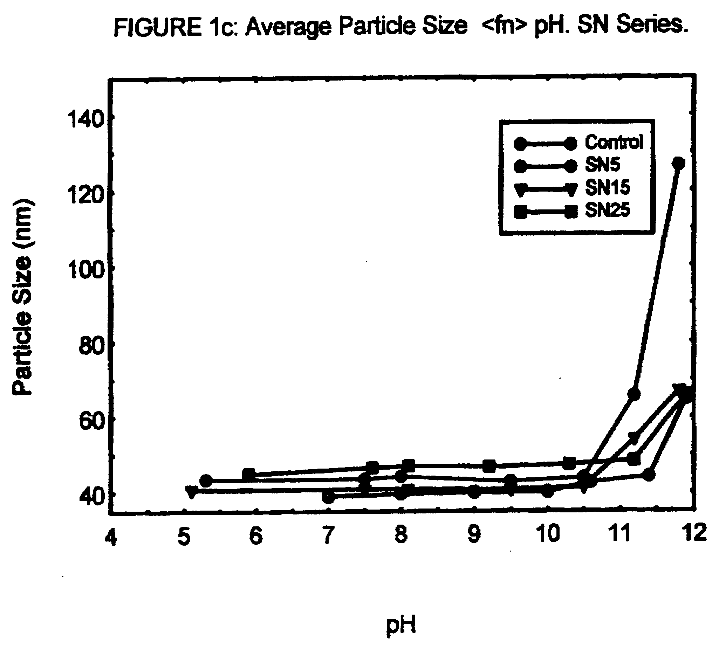

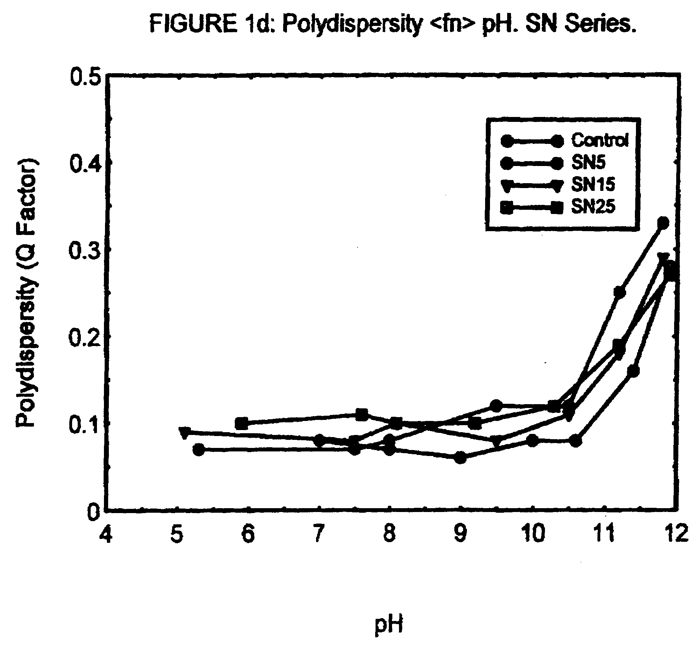

The average particle size of the SA and SN series mocrogels, as a function of pH, (furnished from cumulant analysis of the light scattering correlation function) is shown in Figure 1a and 1c. The corresponding polydispersities are shown in Figure 1b and 1d.

In overviewing all of the particle size data, it is clear that the microgels are not alkali swellable. The sudden increase in size at very high pH's is most probably a result of aggregation/flocculation caused by the ionic stabilising layer becoming ineffective (supported by the rapid increase in polydispersity evident at these pH's). The lack of alkali swelling is more than likely due to the high cross linker concentration employed and the hydrophobicity of styrere (F.V. Loncar et al., ACS Polymer Sci. Eng 52, 299 (1985)).

In comparing the SN to SA series the marginal increase in polydispersities of the SN data versus the SA data tend to support the lower stability of the SN microgels as reported in Example 4 above.

It appears from this data that there is an overall size increase of the SA microgels in relation to the SN microgels, an effect which seems to be dependent upon the AMPS monomer feed concentration. This effect is independent of pH and incdicates that the AMPS monomer affects the particle morphology during the synthesis.

It is possible that the hydrophilic nature of the sulphonic acid produces water rich domains which generate a more open, essentially water swollen structure. Effects of this type have been observed in aqueous polyurethante dispersions (R. Satguru et al., Surface Coatings, Int. 10, (1994) 424-431).

### Example 5

### Catalytic Effects of Microgels

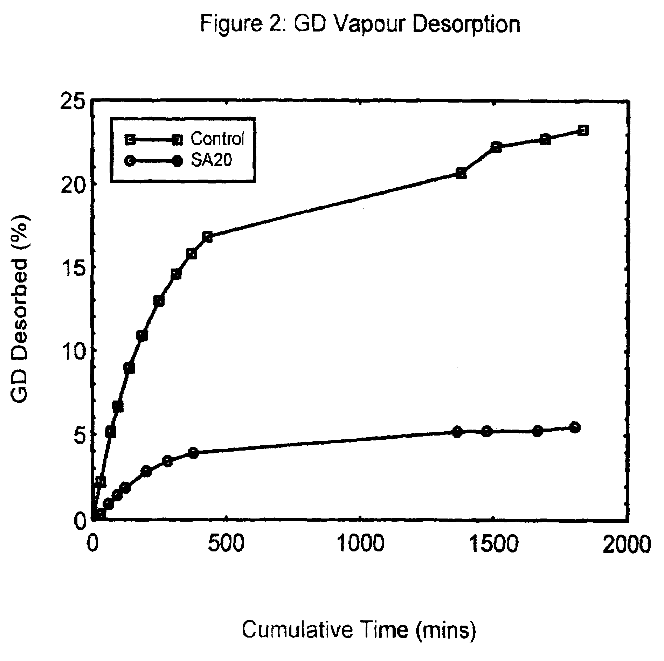

A measured quantity of sulphonic acid functional and non-functionalized control microgel were coated onto glass plates. A 10µl challenge of heat GD was pipetted onto the plate and the amount of GD vapour which desorbed (over a set time period) was measured. The cumulative desorption, as a percentage of the initial challenge, is illustrated for the samples in figure 2, significantly from the graph it is seen that significantly more GD desorbs from the control coating (same mass of material, no catalyst) than from the coating containing acid catalyst. This illustrates the catalyst potential to react with GD and convert it into non volatile products.

## Claims

1. A microgel having on the surface of particles thereof an acid residue which can act as a catalyst.

2. A microgel according to claim 1 wherein the acid residue comprises a sulphonic acid residue.

3. A microgel according to claim 1 or claim 2 which comprises particles of a highly cross-linked polymer.

4. A microgel according to claim 3 wherein the polymer is a styrene or a methylmethacrylate polymer.

5. A microgel according to claim 4 wherein the polymer is a styrene polymer.

6. A method of forming a microgel according to any one of the preceding claims, which method comprises effecting an emulsion polymerisation of a monomer to form a microgel, said polymerisation being carried out in the presence of a catalytic reagent having a catalytic acid functionality or a salt thereof; and thereafter if necessary, converting any salts of said catalytic acid to the acid.

7. A method according to claim 6 wherein the said catalytic reagent comprises an acid.

8. A method according to claim 6 wherein the said catalytic reagent is a salt which is subsequently converted to an acid by ion exchange chromatography.

9. A method according to any one of claims 6 to 8 wherein said catalytic reagent comprises a sulphonic acid derivative of a monomer.

10. A method according to claim 9 wherein the catalytic reagent is selected from styrene sulphonic acid, sulphopropylmethacrylate, 2-acrylamido-2-methyl propane sulphonic acid or a salt thereof.

11. A method according to claim 10 wherein the catalytic reagent is 2-acrylamido-2-methyl propane sulphonic acid

12. A method according to any one of claims 6 to 11 wherein the emlsion polymerisation is effected by mixing together a monomer, a polymerisation initiator, a catalytic reagent and a surfactant under conditions which cause the monomer to polymerise to form a microgel having catalytic acid groups on the surface thereof.

13. A method according to claim 12 wherein the mixture comprises from 5-25%w/w of said catalytic reagent.

14. A method according to claim 13 wherein the mixture further comprises a cross-linking agent.

15. A method according to claim 14 wherein the amount of cross-linker in the mixture is from 5-12%w/w of the amount of monomer present.

16. A method according to claim 16 wherein the amount of cross-linker in the mixture is about 10%w/w of the amount of monomer.

17. A method of decomposing an unwanted chemical which is susceptible to acid catalysed hydrolyis, said method comprising contacting said chemical with a microgel according to anyone of claims 1 to 5 under conditions which allow the acid groups on the microgel to catalyse the decomposition of said chemical.

18. A method according to claim 17 wherein the unwanted chemical is a pesticide or a chemical warfare agent.

19. A method according to claim 18 wherein the microgel is contained within a coating.

20. A method according to claim 19 wherein the coating is macroporous.

21. A microgel substantially as hereinbefore described with reference to the Examples.
